# EUROPEAN PATENT SPECIFICATION

(11) **EP 2 971 527 B1**
(45) Date of publication and mention of the grant of the patent: **05.08.2020**
(21) Application number: 13878293.3
(22) Date of filing: 16.12.2013
(51) Int. Cl.: F01D 5/14, F01D 5/16, F01D 5/28

(54) **HYBRID FAN BLADE BISCUIT CONSTRUCTION**
HYBRIDE GEBLÄSESCHAUFELKONSTRUKTION MIT FLACHDÜBEL
CONSTRUCTION DE PALE DE SOUFFLANTE HYBRIDE AVEC NOYAU COMPRIMÉ

(30) Priority: 15.03.2013 US 201361791108 P; 02.10.2013 US 201361885574 P
(43) Date of publication of application: 20.01.2016
(73) Proprietor: United Technologies Corporation, Farmington, CT 06032 (US)
(72) Inventor: MCCOMB, James, Patrick, Naugatuck, CT 06770 (US)
(74) Representative: Dehns
(86) International application number: PCT/US2013/075356
(87) International publication number: WO 2014/143265

(56) References cited:
- WO-A1-93/08017
- WO-A1-96/06776
- WO-A1-2012/001279
- JP-A- H0 523 920
- JP-A- S59 215 905
- US-A- 4 095 322
- US-A- 5 472 314
- US-A- 5 725 354
- US-A1- 2008 226 459
- US-A1- 2010 054 945
- US-A1- 2010 074 759
- US-A1- 2011 211 967
- US-A1- 2013 004 322
- US-A1- 2013 017 093

## Description

### Field of the Disclosure

The present disclosure relates generally to gas turbine engines and, more particularly, to airfoils such as fan blades in a gas turbine engine.

### Background of the Disclosure

Gas turbine engines may typically include a fan, a compressor, a combustor, and a turbine, with an annular flow path extending axially through each. Initially, the fan, which is powered by the turbine, draws ambient air into the engine. Part of the air flows through the compressor where it is compressed or pressurized. The combustor then mixes and ignites the compressed air with fuel, generating hot combustion gases. These hot combustion gases are then directed from the combustor to the turbine where power is extracted from the hot gases by causing blades of the turbine to rotate. The other part of the airflow from the fan is used to generate forward thrust.

Various components of the gas turbine engine, such as fan, compressor, and turbine airfoils, are subject to the impact of foreign objects. For example, fan blades may experience foreign object damage (FOD) from debris or birds, which may reduce the life of the fan blades. Accordingly, there exists a need for an airfoil design with reinforced strength and impact tolerance.

Furthermore, when increasing the strength of airfoils, there are added concerns of increased weight and thickness, which may decrease the aerodynamic performance of the airfoils and gas turbine engine as a whole. Therefore, there exists a need for an impact resistant airfoil that is also lightweight and aerodynamic. This disclosure is directed to solving these needs and others.

WO 93/08017 A1 discloses a blade comprising a spar having an elongated foam body overlayed with a wrap of structural fibers, trailing and leading edge foam fillers bonded to the spar assembly by injection molding, and a wrap of woven fabric laid up over the blade assembly. A protective sheath may be bonded to the leading edge.

### Summary of the Disclosure

Viewed from one aspect the present invention provides an airfoil for a gas turbine engine according to claim 1.

According to one embodiment, an airfoil for a gas turbine engine is disclosed. The airfoil comprises a sheath including a first slot, a body including a second slot, and a biscuit disposed within the first slot and the second slot, wherein the first slot is sized to fit a first part of the biscuit and the second slot is sized to fit a second part of the biscuit. The first portion and the second portion are joined by the biscuit.

The biscuit is positioned near a leading edge.

The biscuit is positioned in an outer span.

The biscuit is composed of energy absorbent material.

In a refinement, the body may be hollow.

In another refinement, the biscuit may be composed of organic composite material.

In another refinement, the biscuit may be composed of Kevlar.

In yet another refinement, at least one of the first portion and the second portion may be bonded to the biscuit.

Viewed from another aspect the present invention provides a gas turbine engine according to claim 8.

A gas turbine engine is disclosed. The gas turbine engine comprises a fan section, a compressor section downstream of the fan section, a combustor section downstream of the compressor section, and a turbine section downstream of the combustor section. At least one of the fan section, compressor section, and the turbine section having an airfoil that includes a sheath including a first slot sized to fit a first part of a biscuit, a body including a second slot sized to fit a second part of the biscuit, and a biscuit joint between the sheath and the body. The biscuit joint includes a biscuit disposed within and bonded to the first and second slots. The sheath and the body are joined together by the biscuit.

The biscuit is positioned near a leading edge of the airfoil.

The biscuit is positioned in an outer span of the airfoil.

In a refinement, the biscuit may be composed of ballistic material.

In a refinement, a material of the biscuit may be of lighter weight than a material of the sheath, and the material of the biscuit may be of lighter weight than a material of the body.

Viewed from another aspect the present invention discloses a method for constructing an airfoil according to claim 9.

A method for constructing an airfoil is disclosed. The method comprises making a first slot on a sheath, the first slot sized to fit a first part of a biscuit. The method further comprises making a second slot on a body, the second slot sized to fit a second part of the biscuit. The method further comprises joining the sheath and the body together through a biscuit joint, the biscuit disposed within the first slot and the second slot, wherein the first slot is sized to fit a first part of the biscuit and the second slot is sized to fit a second part of the biscuit.

In a refinement, the method may further comprise composing the biscuit of organic composite material.

These and other aspects and features of the disclosure will become more readily apparent upon reading the following detailed description when taken in conjunction with the accompanying drawings. Although various features are disclosed in relation to specific exemplary embodiments of the invention, it is understood that the various features may be combined with each other, or used alone, with any of the various exemplary embodiments of the invention without departing from the scope of the invention.

### Brief Description of the Drawings

FIG. 1 is a cross-sectional view of a gas turbine engine, according to an embodiment of the present disclosure;
FIG. 2 is a side view of an airfoil in the gas turbine engine of FIG. 1 in accordance with an embodiment of the present invention;
FIG. 3 is a top down view of the airfoil of FIG. 2;
FIG. 4 is a side view of a sheath of the airfoil of FIG. 2;
FIG. 5 is a side view of a body of the airfoil of FIG. 2;
FIG. 6 is a side view of a biscuit of the airfoil of FIG. 2;
FIG. 7 is a side view of an airfoil, according to another embodiment of the present invention;
FIG. 8 is a top down view of the airfoil of FIG. 7; and
FIG. 9 is a flowchart illustrating a process for constructing an airfoil for a gas turbine engine, according to another embodiment of the present disclosure.

While the present disclosure is susceptible to various modifications and alternative constructions, certain illustrative embodiments thereof will be shown and described below in detail. The invention is not limited to the specific embodiments disclosed, but instead includes all modifications, alternative constructions, and equivalents thereof falling within the scope of the claims.

### Detailed Description

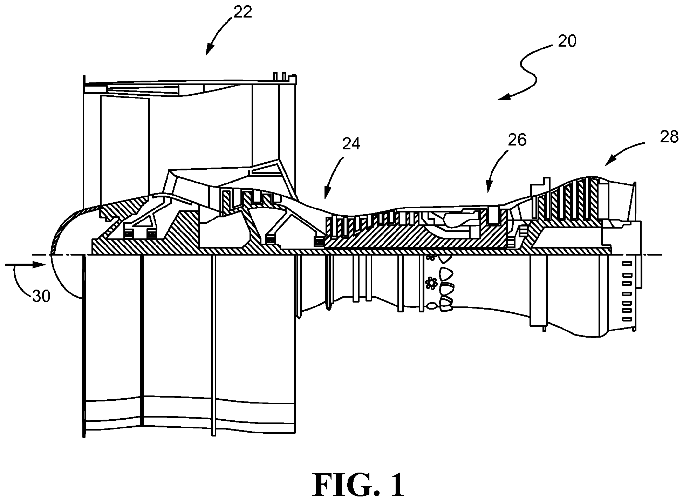

Referring now to the drawings, and with specific reference to FIG. 1, in accordance with the teachings of the disclosure, an exemplary gas turbine engine 20 is shown. The gas turbine engine 20 may generally comprise a fan section 22 which draws ambient air into the engine 20, a compressor section 24 where air is pressurized, a combustor 26 downstream of the compressor section which mixes and ignites the compressed air with fuel and thereby generates hot combustion gases, a turbine section 28 downstream of the combustor 26 for extracting power from the hot combustion gases, and an annular flow path 30 extending axially through each. Gas turbine engine 20 may be used on an aircraft for generating thrust or power, or in land-based operations for generating power as well.

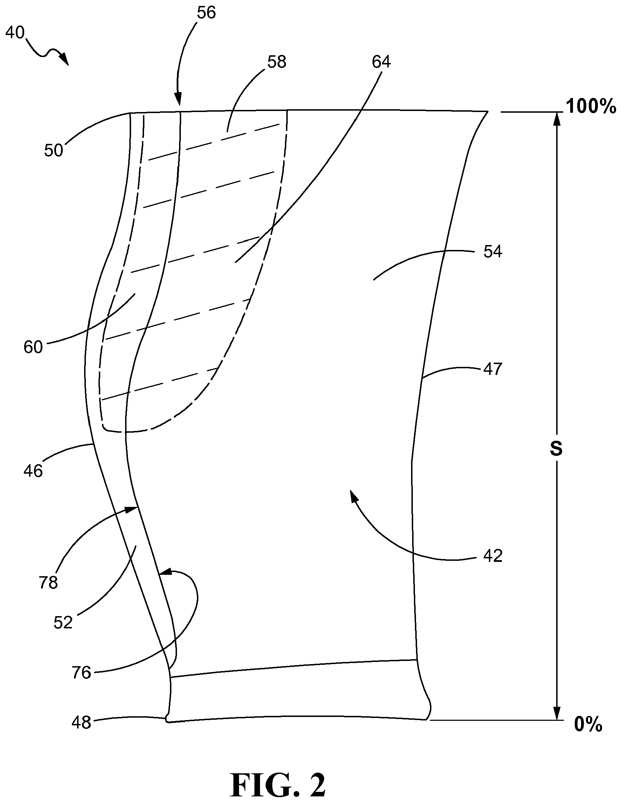

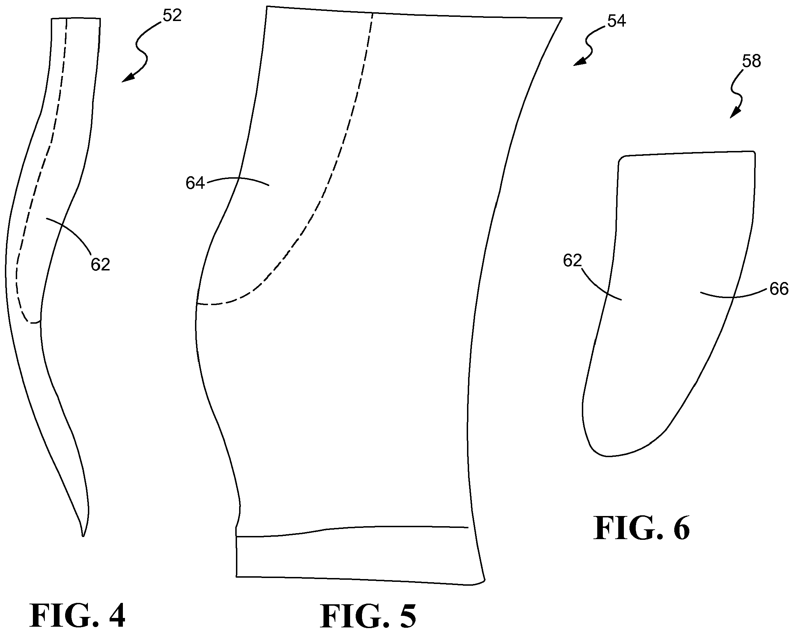

Turning now to FIGS. 2-6, an airfoil 40 of the gas turbine engine 20 is shown, according to an embodiment of the present invention. The airfoil 40 may comprise a fan blade in the fan section 22, or a rotor blade or stator vane in the compressor section 24 or turbine section 28 of the gas turbine engine 20. Airfoil 40 may project radially from an endwall of a rotor in the engine 20. The airfoil 40 may include a first side 42 and an opposite second side 44 extending axially from a leading edge 46 to a trailing edge 47 (downstream of the leading edge 46) and extending radially from a base 48 to a tip 50.

Airfoil 40 is of a hybrid construction including a first portion or sheath 52 and a second portion or body 54. The sheath 52 generally comprises the leading edge 46 and extends a distance therefrom. Composed of solid titanium, or other suitable materials, the sheath 52 provides impact tolerance to foreign object damage (FOD). The body 54 generally comprises a majority of the airfoil 40, extending from the sheath 52 to the trailing edge 47. The body 54 may be composed of an aluminum alloy, or other suitable materials.

The sheath 52 and body 54 are joined together through a biscuit joint 56. The biscuit joint 56 includes a biscuit 58 composed of a stiff, lightweight material that absorbs energy from an impact and increases a stiffness, impact resistance, and aerodynamic performance of the airfoil 40. The biscuit 58 is composed of a material that is of lighter weight than a material of the sheath 52 and is of lighter weight than a material of the body 54. For example, the biscuit 58 may be composed of an organic composite material (e.g., carbon fibers) or organic matrix composites, polymer matrix composite material, energy absorbent material, ballistic material, synthetic material (e.g., para-aramid synthetic fiber), Keviar® (poly-paraphenylene terephthalamide), or the like. By using stiff, lightweight material, the biscuit 58 increases the impact tolerance capabilities of the airfoil 40, while decreasing a weight and thickness of the airfoil 40.

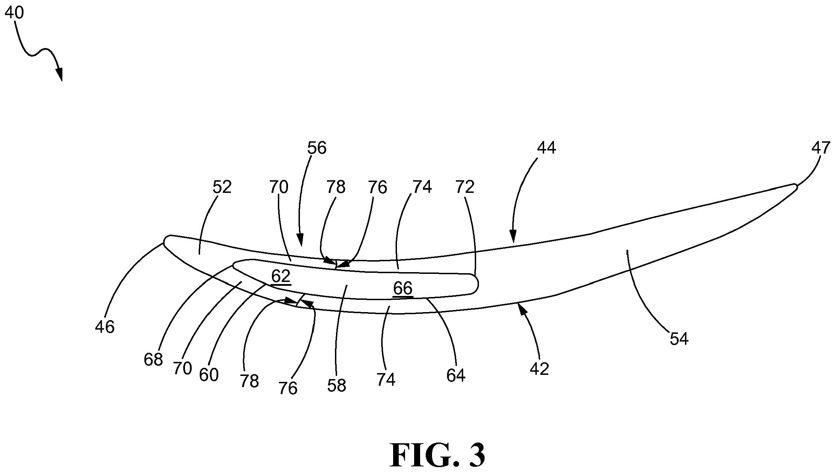

The sheath 52 includes a first slot 60 sized to fit a first part 62 of the biscuit 58, and the body 54 includes a second slot 64 sized to fit a second part 66 of the biscuit 58. As shown best in FIG. 3, the first slot 60 of the sheath 52 may include a recess 68 and flank portions 70 to receive the first part 62 of the biscuit 58. Similarly, the second slot 64 may include a recess 72 and flank portions 74 to receive the second part 66 of the biscuit 58.

Disposed within the first and second slots 60, 64, the biscuit 58 provides a common element of attachment for both the sheath 52 and body 54. With the first part 62 of the biscuit 58 disposed within the first slot 60 of the sheath 52 and the second part 66 of the biscuit 58 disposed within the second slot 64 of the body 54, the sheath 52 and body 54 may be compressed together about the biscuit 58. Surface 76 of the sheath 52 and surface 78 of the body 54 abut against each other, forming a press fit relationship with the biscuit 58.

The sheath 52 and body 54 may be bonded to the biscuit 58. For example, an epoxy, polyurethane adhesive, or other structural adhesive may be used to bond the sheath 52 and body 54 to the biscuit 58. The first part 62 of the biscuit 58 may be bonded to the first slot 60 of the sheath 52, and the second part 66 of the biscuit 58 may be bonded to the second slot 64 of the body 54. The first and second slots 60, 64 may provide requisite surface area for bonding to the biscuit 58. Furthermore, an epoxy, polyurethane adhesive, or other structural adhesive may be used to bond the sheath 52 to the body 54 where surfaces 76, 78 of the sheath 52 and body 54 are in contact with each other. It is to be understood that other methods may be used to bond the biscuit 58, sheath 52, and body 54 together in a biscuit joint 56, such as, without limitation, welding or the like. The biscuit 58, sheath 52, and body 54 may also be joined together via fasteners (e.g., rivets, screws, bolts, etc.), mechanical retention (e.g., inserts, rails, etc.), or other methods.

The biscuit 58 (and associated slots 60, 64 in the sheath 52 and body 54) is positioned near the leading edge 46 and in an outer span of the airfoil 40. As used herein, the term "span" refers to a length S of the airfoil 40 from the base 48 to the tip 50, with relevant distances expressed as a percentage of the length S (0% referenced at the base 48 and 100% referenced at the tip 50). The outer span of the airfoil 40 includes a range of about 50% to about 100% of the length S of the span of the airfoil 40. The position of the biscuit 58 near the leading edge 46 and in the outer span helps stiffen the airfoil 40 and enhance impact tolerance capabilities, while maintaining a minimal thickness of the airfoil 40 in the outer span. The biscuit 58 may also provide internal mechanical damping to the airfoil 40 in order to reduce vibratory stress levels and enhance distortion tolerance capabilities.

Other shapes for the biscuit 58 and arrangements for the biscuit joint 56 than that shown and described are certainly possible. For example, more than one biscuit 58 or more than one biscuit joint 56 may be used to join various parts of the airfoil 40 together.

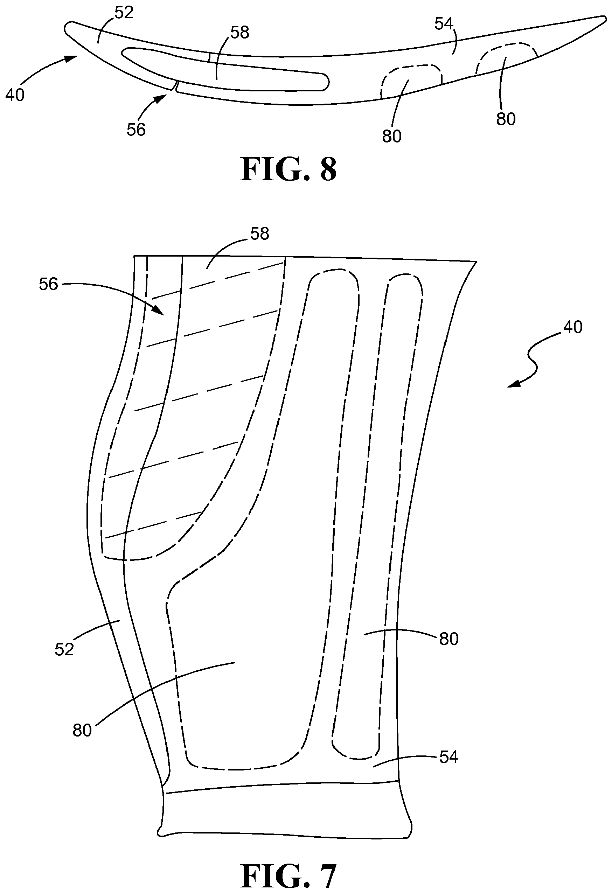

Although the airfoil 40, shown in FIGS. 2-6, is of a solid construction, in another embodiment shown best in FIGS. 7-8, the airfoil 40 may be of a hollow construction. The airfoil 40 may have one or more cavities 80 in order to decrease a weight of the airfoil 40, thereby increasing the aerodynamic performance of the airfoil 40. It is to be understood that the biscuit joint 56 may be used in other configurations of airfoils than that shown and described herein.

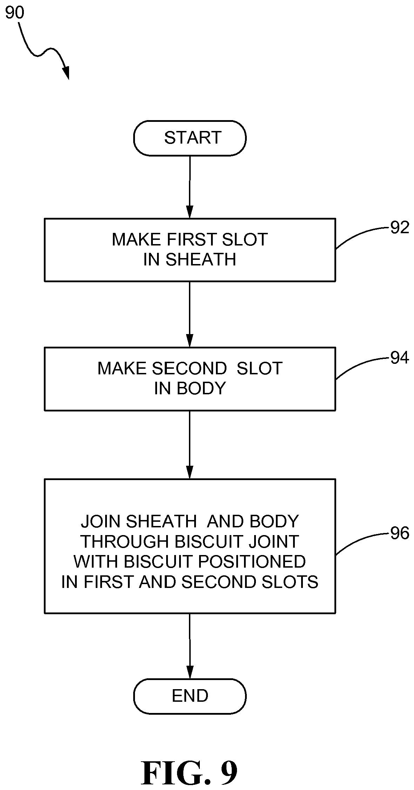

Referring now to the flowchart of FIG. 9, with continued reference to FIGS. 1-8, a process 90 for constructing an airfoil 40 for a gas turbine engine 20 is shown. At block 92, the first slot 60 is made on the sheath 52, the first slot 60 sized to fit the first part 62 of the biscuit 58. At block 94, the second slot 64 is made on the body 54, the second slot 64 sized to fit the second part 66 of the biscuit 58. For example, the first and second slots 60, 64 may be made in the sheath 52 and body 54, respectively, via machining, standard milling, electrical discharge machining, electrochemical machining, chemical milling, forming material into shape (e.g., bending), or the like. At block 96, the sheath 52 and the body 54 are joined together through the biscuit joint 56 with the biscuit 58 positioned within the first slot 60 and the second slot 64. For example, the biscuit 58 may be bonded or welded to the first slot 60 of the sheath 52 and the second slot 64 of the body 54. It is to be understood that blocks 92-96 may be performed in a different order than that shown in FIG. 9.

### Industrial Applicability

From the foregoing, it can be seen that the teachings of this disclosure can find industrial application in any number of different situations, including but not limited to, gas turbine engines. Such engines may be used, for example, on aircraft for generating thrust, or in land, marine, or aircraft applications for generating power.

The present disclosure provides a hybrid airfoil biscuit construction for a gas turbine engine and a method of manufacturing same. The disclosed biscuit joint for the airfoil serves the dual purpose of joining the sheath to the body and enhancing impact tolerance capabilities of the airfoil. By providing a biscuit as a common point of attachment for the sheath and the body, a strong joint between the sheath and the body may be achieved. In addition, by selecting lightweight, energy absorbent materials for the biscuit, the biscuit joint reinforces the strength and stiffness of the airfoil, while decreasing its weight and thickness.

Placing the biscuit near the leading edge and outer span of the airfoil further improves the impact resistance of the airfoil to FOD. The biscuit may also provide internal mechanical damping to the airfoil in order to reduce vibratory stress levels and enhance distortion tolerance capabilities. Thus, the disclosed hybrid airfoil biscuit construction provides a robust, durable, and aerodynamic airfoil for a gas turbine engine, which thereby increases the life and aerodynamic performance for the gas turbine engine as a whole.

While the foregoing detailed description has been given and provided with respect to certain specific embodiments, it is to be understood that the scope of the disclosure should not be limited to such embodiments, but that the same are provided simply for enablement and best mode purposes.

## Claims

1. An airfoil (40) for a gas turbine engine (20), wherein the airfoil (40) is a hybrid construction including:
a sheath (52) generally comprising a leading edge (46) of the airfoil (40) and including a first slot (60), the sheath extending from the leading edge (46) of the airfoil (40);
a body (54) generally comprising a majority of the airfoil (40) and extending from the sheath (52) to a trailing edge (47) of the airfoil (40), the body including a second slot (64);
a biscuit joint (56) between the sheath (52) and the body (54), the biscuit joint (56) including a biscuit (58) disposed within the first slot (60) and the second slot (64), the sheath (52) and the body (54) being joined together by the biscuit (58) using bonding, fastening or mechanical retention means;
wherein the first slot (60) extends in a generally spanwise direction and includes a recess (68) and flank portions (70) to receive a first part (62) of the biscuit (58) and the second slot (64) extends in a generally spanwise direction and includes a recess (72) and flank portions (74) to receive a second part (66) of the biscuit (58), the biscuit (58) being positioned near the leading edge (46) and in an outer span of the airfoil (40) including a range of about 50% to about 100% of a length (S) of the span of the airfoil (40) from its base (48) to its tip (50), and wherein the biscuit (58) is composed of a stiff, lightweight and energy absorbent material and the position of the biscuit (58) and its material helps stiffen the airfoil (40) and enhance impact tolerance capabilities of the airfoil (40) in the outer span;
**characterised in that** end surfaces (76, 78) of the flank portions (70, 74) of the sheath (52) and the body (54) are in contact with and bonded to each other along the span of the airfoil (40) to fully encapsulate the biscuit (58) within the slots (60, 64).

2. The airfoil (40) of claim 1, wherein the body (54) is hollow.

3. The airfoil (40) of any preceding claim, wherein the biscuit (58) is composed of organic composite material.

4. The airfoil (40) of claim 1 or 2, wherein the biscuit (58) is composed of poly-paraphenylene terephthalamide.

5. The airfoil (40) of any preceding claim, wherein at least one of the sheath (52) and the body (54) is bonded to the biscuit (58).

6. The airfoil (40) of claim 1 or 2, wherein the biscuit (58) is composed of ballistic material.

7. The airfoil (40) of any preceding claim, wherein a material of the biscuit (58) is of lighter weight than a material of the sheath (52), and wherein the material of the biscuit (58) is of lighter weight than a material of the body (54).

8. A gas turbine engine (20), comprising:
a fan section (22);
a compressor section (24) downstream of the fan section;
a combustor section (26) downstream of the compressor section; and
a turbine section (28) downstream of the combustor section, at least one of the fan section (22), compressor section (24), and the turbine section (28) having an airfoil (40) as in any of claims 1 to 7.

9. A method for constructing an airfoil (40), the airfoil (40) being a hybrid construction, the method comprising:
making a first slot (60) on a sheath (52), the first slot (60) extending in a generally spanwise direction and including a recess (68) and flank portions (70) to receive a first part (62) of a biscuit (58), the sheath (52) generally comprising a leading edge (46) of the airfoil (40) and the sheath extending from the leading edge (46) of the airfoil (40);
making a second slot (64) on a body (54), the second slot (64) extending in a generally spanwise direction and including a recess (72) and flank portions (74) to receive a second part (66) of the biscuit (58), the body generally comprising a majority of the airfoil (40) and extending from the sheath (52) to a trailing edge (47) of the airfoil (40);
disposing the biscuit (58) within the first slot (60) and the second slot (64) to provide a biscuit joint (56) between the sheath (52) and the body (54); and
joining the sheath (52) and the body (54) together by the biscuit (58) using bonding, fastening or mechanical retention means;
wherein the biscuit (58) is positioned near the leading edge (46) and in an outer span of the airfoil (40) including a range of about 50% to about 100% of a length (S) of the span of the airfoil (40) from its base (48) to its tip (50), and wherein the biscuit (58) is composed of a stiff, lightweight and energy absorbent material and the position of the biscuit (58) and its material helps stiffen the airfoil (40) and enhance impact tolerance capabilities of the airfoil (40) in the outer span;
**characterised in that** end surfaces (76, 78) of the flank portions (70, 74) of the sheath (52) and the body (54) are in contact with and bonded to each other along the span of the airfoil (40) to fully encapsulate the biscuit (58) within the slots (60, 64).

10. The method of claim 9, wherein the biscuit (58) is composed of organic composite material.

## Patentansprüche

1. Schaufelprofil (40) für ein Gasturbinentriebwerk (20), wobei das Schaufelprofil (40) eine Hybridkonstruktion ist, die Folgendes beinhaltet:
eine Hülle (52), die im Allgemeinen eine Vorderkante (46) des Schaufelprofils (40) umfasst und eine erste Aussparung (60) beinhaltet, wobei sich die Hülle von der Vorderkante (46) des Schaufelprofils (40) aus erstreckt;
einen Körper (54), der im Allgemeinen einen Großteil des Schaufelprofils (40) umfasst und sich von der Hülle (52) bis zu einer Hinterkante (47) des Schaufelprofils (40) erstreckt, wobei der Körper eine zweite Aussparung (64) beinhaltet;
eine Flachdübelverbindung (56) zwischen der Hülle (52) und dem Körper (54), wobei die Flachdübelverbindung (56) einen Flachdübel (58) beinhaltet, der innerhalb der ersten Aussparung (60) und der zweiten Aussparung (64) angeordnet ist, wobei die Hülle (52) und der Körper (54) durch den Flachdübel (58) unter Verwendung von Klebe-, Befestigungs- oder mechanischen Sicherungsmitteln miteinander verbunden werden;
wobei sich die erste Aussparung (60) in einer allgemeinen Profilrichtung erstreckt und eine Vertiefung (68) und Flankenabschnitte (70) beinhaltet, um einen ersten Teil (62) des Flachdübels (58) aufzunehmen, und wobei sich die zweite Aussparung (64) in einer allgemeinen Profilrichtung erstreckt und eine Vertiefung (72) und Flankenabschnitte (74) beinhaltet, um einen zweiten Teil (66) des Flachdübels (58) aufzunehmen, wobei der Flachdübel (58) nahe der Vorderkante (46) und in einem äußeren Profil des Schaufelprofils (40), das einen Bereich von etwa 50 % bis etwa 100 % einer Länge (S) des Profils des Schaufelprofils (40) von seiner Basis (48) zu seiner Spitze (50) beinhaltet, angeordnet ist, und wobei der Flachdübel (58) aus einem steifen, leichten und energieabsorbierenden Material besteht und die Position des Flachdübels (58) und sein Material dazu beitragen, das Schaufelprofil (40) zu versteifen und die Schlagfestigkeitseigenschaften des Schaufelprofil (40) im äußeren Profil zu verbessern;
**dadurch gekennzeichnet, dass** die Endflächen (76, 78) der Flankenabschnitte (70, 74) der Hülle (52) und des Körpers (54) entlang des Profils des Schaufelprofils (40) in Kontakt miteinander stehen und aneinander geklebt sind, um den Flachdübel (58) vollständig innerhalb der Aussparungen (60, 64) einzuschließen.

2. Schaufelprofil (40) nach Anspruch 1, wobei der Körper (54) hohl ist.

3. Schaufelprofil (40) nach einem der vorstehenden Ansprüche, wobei der Flachdübel (58) aus einem organischen Verbundmaterial besteht.

4. Schaufelprofil (40) nach Anspruch 1 oder 2, wobei der Flachdübel (58) aus Polyparaphenylenterephthalamid besteht.

5. Schaufelprofil (40) nach einem der vorstehenden Ansprüche, wobei mindestens eines aus der Hülle (52) und dem Körper (54) an den Flachdübel (58) geklebt ist.

6. Schaufelprofil (40) nach Anspruch 1 oder 2, wobei der Flachdübel (58) aus einem ballistischen Material besteht.

7. Schaufelprofil (40) nach einem der vorstehenden Ansprüche, wobei ein Material des Flachdübels (58) leichtgewichtiger ist als ein Material der Hülle (52) und wobei das Material des Flachdübels (58) leichtgewichtiger ist als ein Material des Körpers (54).

8. Gasturbinentriebwerk (20), umfassend:
einen Fanabschnitt (22);
einen Verdichterabschnitt (24) stromabwärts des Fanabschnitts;
einen Brennkammerabschnitt (26) stromabwärts des Verdichterabschnitts; und
einen Turbinenabschnitt (28) stromabwärts des Brennkammerabschnitts, wobei mindestens einer aus dem Fanabschnitt (22), dem Brennkammerabschnitt (24) und dem Turbinenabschnitt (28) ein Schaufelprofil (40) nach einem der Ansprüche 1 bis 7 aufweist.

9. Verfahren zum Herstellen eines Schaufelprofils (40), wobei das Schaufelprofil (40) eine Hybridkonstruktion ist, wobei das Verfahren Folgendes umfasst:
Ausbilden einer ersten Aussparung (60) an einer Hülle (52), wobei sich die erste Aussparung (60) in einer allgemeinen Profilrichtung erstreckt und eine Vertiefung (68) und Flankenabschnitte (70) beinhaltet, um einen ersten Teil (62) eines Flachdübels (58) aufzunehmen, wobei die Hülle (52) im Allgemeinen eine Vorderkante (46) des Schaufelprofils (40) beinhaltet und sich die Hülle von der Vorderkante (46) des Schaufelprofils (40) aus erstreckt;
Ausbilden einer zweiten Aussparung (64) an einem Körper (54), wobei sich die zweite Aussparung (64) in einer allgemeinen Profilrichtung erstreckt und eine Vertiefung (72) und Flankenabschnitte (74) beinhaltet, um einen zweiten Teil (66) des Flachdübels (58) aufzunehmen, wobei der Körper im Allgemeinen einen Großteil des Schaufelprofils (40) umfasst und sich von der Hülle (52) aus zu einer Hinterkante (47) des Schaufelprofils (40) erstreckt;
Anordnen des Flachdübels (58) innerhalb der ersten Aussparung (60) und der zweiten Aussparung (64), um eine Flachdübelverbindung (56) zwischen der Hülle (52) und dem Körper (54) bereitzustellen; und
Verbinden der Hülle (52) und des Körpers (54) miteinander durch den Flachdübel (58) unter Verwendung von Klebe-, Befestigungs- oder mechanischen Haltemitteln;
wobei der Flachdübel (58) nahe der Vorderkante (46) und in einem äußeren Profil des Schaufelprofils (40), das einen Bereich von etwa 50 % bis etwa 100 % einer Länge (S) des Profils des Schaufelprofils (40) von seiner Basis (48) zu seiner Spitze (50) beinhaltet, angeordnet ist, und wobei der Flachdübel (58) aus einem steifen, leichten und energieabsorbierenden Material besteht und die Position des Flachdübels (58) und sein Material dazu beitragen, das Schaufelprofil (40) zu versteifen und die Schlagfestigkeitseigenschaften des Schaufelprofil (40) im äußeren Profil zu verbessern;
**dadurch gekennzeichnet, dass** die Endflächen (76, 78) der Flankenabschnitte (70, 74) der Hülle (52) und des Körpers (54) entlang des Profils des Schaufelprofil (40) in Kontakt miteinander stehen und aneinander geklebt sind, um den Flachdübel (58) vollständig innerhalb der Aussparungen (60, 64) einzuschließen.

10. Verfahren nach Anspruch 9, wobei der Flachdübel (58) aus einem organischen Verbundmaterial besteht.

## Revendications

1. Profil aérodynamique (40) pour un moteur à turbine à gaz (20), dans lequel le profil aérodynamique (40) est une construction hybride comportant :
une gaine (52) comprenant généralement un bord d'attaque (46) du profil aérodynamique (40) et comportant une première fente (60), la gaine s'étendant depuis le bord d'attaque (46) du profil aérodynamique (40) ;
un corps (54) comprenant généralement une majorité du profil aérodynamique (40) et s'étendant de la gaine (52) à un bord de fuite (47) du profil aérodynamique (40), le corps comportant une seconde fente (64) ;
un joint d'insertion (56) entre la gaine (52) et le corps (54), le joint d'insertion (56) comportant une insertion (58) disposée à l'intérieur de la première fente (60) et de la seconde fente (64), la gaine (52) et le corps (54) étant réunis par l'insertion (58) à l'aide de moyens de liaison, de fixation ou de retenue mécanique ;
dans lequel la première fente (60) s'étend généralement dans le sens de l'envergure et comporte un évidement (68) et des parties de flanc (70) pour recevoir une première partie (62) de l'insertion (58) et la seconde fente (64) s'étend généralement dans le sens de l'envergure et comporte un évidement (72) et des parties de flanc (74) pour recevoir une seconde partie (66) de l'insertion (58), l'insertion (58) étant positionnée près du bord d'attaque (46) et dans une envergure externe du profil aérodynamique (40) comportant une plage d'environ 50 % à environ 100 % d'une longueur (S) de l'envergure du profil aérodynamique (40) de sa base (48) à son extrémité (50), et dans lequel l'insertion (58) est composée d'un matériau rigide, léger et absorbant l'énergie et la position de l'insertion (58) et son matériau aide à rigidifier le profil aérodynamique (40) et à améliorer les capacités de tolérance aux chocs du profil aérodynamique (40) dans l'envergure externe ;
**caractérisé en ce que** les surfaces d'extrémité (76, 78) des parties de flanc (70, 74) de la gaine (52) et du corps (54) sont en contact et liées entre elles le long de l'envergure du profil aérodynamique (40) pour encapsuler complètement l'insertion (58) à l'intérieur des fentes (60, 64).

2. Profil aérodynamique (40) selon la revendication 1, dans lequel le corps (54) est creux.

3. Profil aérodynamique (40) selon une quelconque revendication précédente, dans lequel l'insertion (58) est composée d'un matériau composite organique.

4. Profil aérodynamique (40) selon la revendication 1 ou 2, dans lequel l'insertion (58) est composée de polyparaphénylène téréphtalamide.

5. Profil aérodynamique (40) selon une quelconque revendication précédente, dans lequel au moins l'un de la gaine (52) et du corps (54) est lié à l'insertion (58).

6. Profil aérodynamique (40) selon la revendication 1 ou 2, dans lequel l'insertion (58) est composée d'un matériau balistique.

7. Profil aérodynamique (40) selon une quelconque revendication précédente, dans lequel un matériau de l'insertion (58) est d'un poids plus léger qu'un matériau de la gaine (52), et dans lequel le matériau de l'insertion (58) est d'un poids plus léger qu'un matériau du corps (54).

8. Moteur à turbine à gaz (20), comprenant :
une section de soufflante (22) ;
une section de compresseur (24) en aval de la section de soufflante ;
une section de chambre de combustion (26) en aval de la section de compresseur ; et
une section de turbine (28) en aval de la section de chambre de combustion, au moins l'une de la section de soufflante (22), de la section de compresseur (24) et de la section de turbine (28) ayant un profil aérodynamique (40) selon l'une quelconque des revendications 1 à 7.

9. Procédé de construction d'un profil aérodynamique (40), le profil aérodynamique (40) étant une construction hybride, le procédé comprenant :
la réalisation d'une première fente (60) sur une gaine (52), la première fente (60) s'étendant généralement dans le sens de l'envergure et comportant un évidement (68) et des parties de flanc (70) pour recevoir une première partie (62) d'une insertion (58), la gaine (52) comprenant généralement un bord d'attaque (46) du profil aérodynamique (40) et la gaine s'étendant depuis le bord d'attaque (46) du profil aérodynamique (40) ;
la réalisation d'une seconde fente (64) sur un corps (54), la seconde fente (64) s'étendant généralement dans le sens de l'envergure et comportant un évidement (72) et des parties de flanc (74) pour recevoir une seconde partie (66) de l'insertion (58), le corps comprenant généralement une majorité du profil aérodynamique (40) et s'étendant de la gaine (52) à un bord de fuite (47) du profil aérodynamique (40) ;
le dépôt de l'insertion (58) à l'intérieur de la première fente (60) et de la seconde fente (64) pour fournir un joint d'insertion (56) entre la gaine (52) et le corps (54) ; et
la jonction de la gaine (52) et du corps (54) ensemble par l'insertion (58) en utilisant des moyens de liaison, de fixation ou de retenue mécanique ;
dans lequel l'insertion (58) est positionnée près du bord d'attaque (46) et dans une envergure externe du profil aérodynamique (40) comportant une plage d'environ 50 % à environ 100 % d'une longueur (S) de l'envergure du profil aérodynamique (40) de sa base (48) à son extrémité (50), et dans lequel l'insertion (58) est composée d'un matériau rigide, léger et absorbant l'énergie et la position de l'insertion (58) et son matériau aide à rigidifier le profil aérodynamique (40) et à améliorer les capacités de tolérance aux chocs du profil aérodynamique (40) dans l'envergure externe ;
**caractérisé en ce que** les surfaces d'extrémité (76, 78) des parties de flanc (70, 74) de la gaine (52) et du corps (54) sont en contact et liées entre elles le long de l'envergure du profil aérodynamique (40) pour encapsuler complètement l'insertion (58) dans les fentes (60, 64).

10. Procédé selon la revendication 9, dans lequel l'insertion (58) est composée d'un matériau composite organique.
